# FASCICULE DE BREVET EUROPEEN

(11) **EP 0 638 444 B1**
(45) Date de publication et mention de la délivrance du brevet: **28.08.1996**
(21) Numéro de dépôt: 94490033.1
(22) Date de dépôt: 27.07.1994
(51) Int. Cl.: B60B 17/00

(54) **Roue monobloc pour matériel ferroviaire tel une motrice ou un wagon**
Aus einen Stück hergestelltes Rad für Eisenbahnwagen z.B. Triebfahrzeug oder Wagen
Integral type wheel for railway material e.g. motorvehicle or wagon

(30) Priorité: 10.08.1993 FR 9309989
(43) Date de publication de la demande: 15.02.1995
(73) Titulaire: ARBEL FAUVET RAIL S.A., F-59506 Douai Cédex (FR)
(72) Inventeur: Ven, Jean Michel, F-59800 Lille (FR)
(74) Mandataire: Ecrepont, Robert

(56) Documents cités:
- EP-A- 0 320 616
- DE-B- 1 148 577
- FR-A- 2 247 359
- GB-A- 952 444
- GB-A- 2 182 108

## Description

L'invention se rapporte à une roue monobloc telle que décrite dans le préambule de la revendication 1 pour materiel ferroviaire tel une motrice ou un wagon. Une roue monobloc de ce type est connue de l'art antérieur, par exemple, par le document EP-A-0 320 616.

Les performances de ces véhicules sont notamment liées à l'ensemble constitué des roues et du système de freinage utilisé qui détermine notamment la charge à l'essieu et la vitesse limite de déplacement du convoi pour laquelle le freinage est suffisant.

Une roue couramment utilisée est celle du type dont la couronne périphérique présentant la table de roulement est reliée au moyeu par un voile en S.

Les roues en une seule pièce sont obtenues par forgeage contrairement aux roues à bandage qui sont abandonnées depuis longtemps car elles ne tiennent pas suffisamment la charge.

Sa préférence tient au fait que le voile en S permet d'obtenir une certaine élasticité de cette roue.

Le système de freinage le plus répandu pour ce type de roue est celui à sabots.

Dans l'ensemble obtenu, la table de roulement est alors également utilisée pour le freinage par pincement diamétral par deux sabots.

L'inconvénient de cet ensemble est, d'une part, que l'usure due au roulement et celle due au freinage s'exerce sur la même surface d'où une vitesse d'usure de la roue qui est considérablement augmentée et, d'autre part, que l'échauffement dû au roulement et au freinage de la roue provoque une dilatation de cette roue à la fois radialement et axialement ce qui, outre une concentration de contraintes dans le voile en S, produit un déplacement trés prolongé du bord extérieur de la roue ce qui engendre le phénomène dit de déjetage.

Pour limiter ce phénomène à des valeurs admissibles, il faut, soit réduire la vitesse de déplacement, soit limiter la charge.

On connaît également un ensemble comprenant un système de freinage à disque de frein qui est calé sur l'essieu indépendamment de la roue et qui reçoit sur ses faces opposées la pression de machoires de freinage.

Notamment pour des raisons de gabarit, cette solution est malheureusement incompatible avec des roues d'un faible diamètre et, par exemple, inférieur à six cent cinquante millimètres.

Cela impose également un montage extrêmement rigoureux et une multiplication des disques parallèlement à l'augmentation de charge d'où notamment des problèmes pour loger les dits disques.

Dans une variante de réalisation, au lieu d'au moins un disque calé sur l'essieu, indépendamment de la roue, c'est la roue qui porte directement de manière amovible des flasques dont les faces externes forment des surfaces de freinage.

Dans cette solution, les moyens de liaison des flasques sur la roue et notamment sur le moyeu de la roue imposent des formes compliquées qui sont le siège de contraintes localisées excessivement importantes.

Dans une autre variante réservée aux roues de faibles diamètres, au lieu des flasques, ce sont les deux faces externes et parallèles de la roue qui servent directement de surface de freinage.

Dans les réalisations connues, la roue a alors depuis le moyeu jusqu'à sensiblement le bord de sa table de roulement une épaisseur constante.

Malheureusement, avec cette solution apparemment intéressante, lors du freinage, il se produit, dans les zones d'appui de garnitures de freins, un échauffement qui, du fait de la nature du matériau constituant la roue et de sa forme, se propage trés rapidement vers le moyeu et les roulements et provoque par dilatation de la roue des effets excessivement néfastes notamment sur le calage des roues sur l'essieu.

Pour tenter de réduire cette propagation thermique, il est connu (EP-A-0320616, GB-A-2.182.108) de réaliser, dans le flanc d'une telle roue, et ce dans une zone proche du moyeu, une rainure circulaire.

Cette solution ne donne toutefois pas de résultats satisfaisants car, vu la faible profondeur de la rainure par rapport à l'épaisseur de la roue, la propagation de la chaleur continue de se faire dans la quasi totalité de l'épaisseur de la roue.

Un des résultats que l'invention vise à obtenir est une roue qui puisse supporter des freinages plus importants sans qu'ils engendrent des déformations allant au delà de limites acceptables.

A cet effet, l'invention a pour objet une roue du type précité comprenant un moyeu et portant, à une distance prédéterminée de son axe, une table de roulement dont les flancs réalisent directement des surfaces d'appui pour des garnitures de freinage et comprenant des moyens pour réduire la propagation de la température lors du freinage, cette roue étant caractérisée en ce que :
- elle présente, entre le moyeu et les surfaces d'appui des garnitures de frein, une zone intermédiaire dont l'épaisseur est substantiellement réduite par rapport à l'épaisseur de la roue mesurée entre les surfaces de freinage portées par les flancs de la partie périphérique, cette zone intermédiaire réalisant un voile de liaison entre la dite partie périphérique et le moyeu de la roue et,
- le voile intermédiaire a son épaisseur qui décroit depuis le moyeu jusqu'à sa jonction à la partie périphérique portant les surfaces d'appui des garnitures de frein et est raccordée à cette partie périphérique par des moyens de raccordement limitant les concentrations de contraintes.

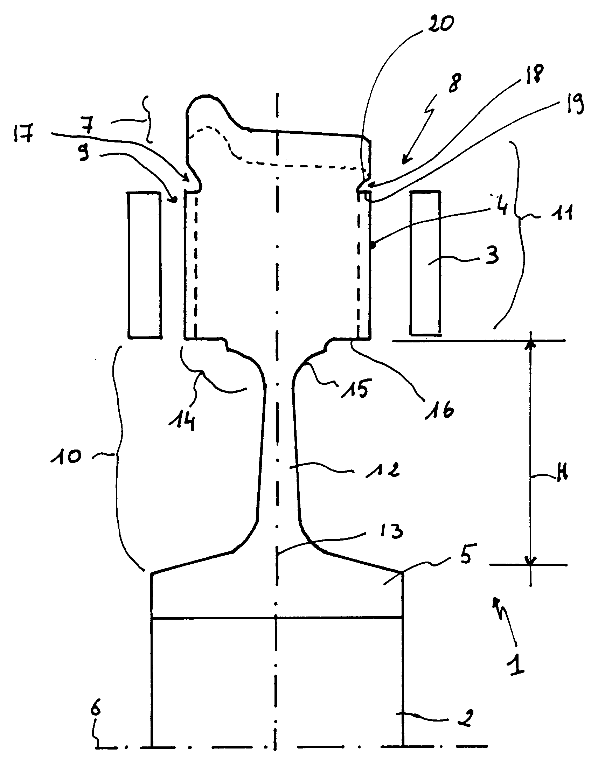

L'invention sera bien comprise à l'aide de la description ci-aprés faite à titre d'exemple non limitatif en regard du dessin ci-annexé qui représente schématiquement une roue vue en coupe.

En se reportant au dessin, on voit une roue monobloc 1 qui équipe un matériel ferroviaire, tel une motrice ou un wagon (non représenté).

Cette roue 1 est classiquement montée sur un essieu 2, par exemple, un des essieux d'un bogie.

De manière connue, le matériel ferroviaire est, par ailleurs, pourvu d'un dispositif de freinage mettant en oeuvre des garnitures 3 de frein agissant chacune directement sur une surface 4 de freinage que porte la roue 1.

Ces garnitures sont de taille identique.

A cet effet, la roue est formée d'un moyeu 5 portant à une distance prédéterminée de son axe 6 une table de roulement 7 et deux flancs 8, 9 externes constituant directement au moins localement les surfaces 4 d'appui des garnitures de freinage du système de freinage précité.

Selon l'invention :
- la roue présente, entre le moyeu 5 et les surfaces d'appui 4 des garnitures de frein, une zone intermédiaire 10 dont l'épaisseur est substantiellement réduite par rapport à l'épaisseur de la roue mesurée entre les surfaces 4 de freinage portées par les flancs de la partie périphérique 11, cette zone intermédiaire réalisant un voile 12 de liaison entre la dite partie périphérique 11 et le moyeu 5 de la roue et,
- le voile intermédiaire 12 a son épaisseur qui décroit depuis le moyeu 5 jusqu'à sa jonction à la partie périphérique 11 portant les surfaces 4 d'appui des garnitures 3 de frein et est raccordée à cette partie périphérique 11 par des moyens 14 de raccordement limitant les concentrations de contraintes.

La hauteur H de ce voile 12 est suffisamment grande par rapport au diamètre de la roue pour former une barrière thermique entre la partie périphérique 11 et le moyeu 5.

L'épaisseur du voile intermédiaire 12 est, de préférence, inférieure à la moitié de l'épaisseur mesurée entre les surfaces d'appui 4 des garnitures 3.

Selon l'invention, le voile intermédiaire 12 a, vu en coupe par un plan contenant l'axe de rotation 6 de la roue 1, un profil dit transversal sensiblement symétrique par rapport à un axe 13 sécant au dit axe de rotation 6 de la roue.

Dans une forme préférée de réalisation, cet axe sécant 13 est perpendiculaire à l'axe 6 de rotation de la roue et la zone intermédiaire forme un voile droit symétrique.

Dans une variante de réalisation (non représentée), cet axe sécant 13 de relative symétrie est incliné par rapport à la perpendiculaire à l'axe 6 de rotation de la roue et la zone intermédiaire 10 forme un voile légèrement conique.

La zone intermédiaire constitue une zone de transition thermo-mécanique qui fait obstacle à la propagation de la température entre le moyeu et la partie périphérique.

Selon l'invention, ces moyens 14 de raccordement consistent en un accroissement progressif de la matière depuis le voile intermédiaire 12 jusqu'à la partie périphérique et cet accroissement de matière débute par une large courbe de raccordement 15 de forme et valeur prédéterminées.

Dans une forme préférée, cette courbe de raccordement 15 est du type elliptique.

Entre chacune des faces externes 4 de la partie périphérique 11 et celle correspondante des moyens 15 de raccordement du voile intermédiaire 12 à cette partie périphérique 11, la roue présente une portée cylindrique interne 16 permettant notamment de centrer la roue sur une machine de reprofilage des tables de roulement.

Cette zone doit résister aux effets d'entaille donc avoir une épaisseur minimale et doit éviter la propagation de la température, donc ne doit pas être trop épaisse.

Selon l'invention, entre la table de roulement et la partie pourvue des surfaces 4 d'appui des garnitures de frein 3, la roue présente sur chaque flanc une gorge annulaire 17, 18 ayant une section en Vé dont celle (19) de ses deux parois 19, 20 qui est la plus proche du moyeu forme une portée cylindrique mâle concentrique à l'axe de rotation de la roue.

Ces particularités techniques permettent de réduire la vitesse de propagation vers le moyeu de l'échauffement produit par frottement des garnitures de frein sur les surfaces d'appui.

En conséquence, on peut augmenter la charge à l'essieu sans sortir du cadre des caractéristiques de tenue au freinage imposées sur les réseaux ferroviaires.

En outre, on préserve l'élasticité de la roue.

Egalement, la symétrie du freinage et la symétrie de la roue limite le phénomène de dilatation à une dilatation de type quasi radiale et supprime par la même le déjetage qui se produit habituellement.

Cette nouvelle roue est d'un coût de revient relativement peu important par rapport à une roue du type voile en S.

Elle a un potentiel poids-frein plus important car les concentrations de contraintes ne sont plus localisées.

Il s'agit d'une technologie qui est également parfaitement adaptée aux roues de faible diamètre et notamment de diamètre inférieur à six cent cinquante millimètres.

## Revendications

1. Roue monobloc pour matériel ferroviaire comprenant un moyeu (5) et portant à une distance prédéterminée de son axe (6) une table de roulement (7) dont les flancs (8, 9) réalisent directement des surfaces d'appui (4) pour des garnitures de freinage (3),
laquelle roue présente des moyens pour réduire la propagation de la température au moment du freinage,
cette roue étant **CARACTERISEE** en ce que :
- elle présente, entre le moyeu (5) et les surfaces d'appui (4) des garnitures de frein, une zone intermédiaire (10) dont l'épaisseur est substantiellement réduite par rapport à l'épaisseur de la roue mesurée entre les surfaces (4) de freinage portées par les flancs de la partie périphérique (11), cette zone intermédiaire réalisant un voile (12) de liaison entre la dite partie périphérique (11) et le moyeu (5) de la roue et,
- le voile intermédiaire (12) a son épaisseur qui décroit depuis le moyeu (5) jusqu'à sa jonction à la partie périphérique (11) portant les surfaces (4) d'appui des garnitures (3) de frein et est raccordée à cette partie périphérique (11) par des moyens (14) de raccordement limitant les concentrations de contraintes.

2. Roue selon la revendication 1 **caractérisée** en ce que la hauteur (H) de ce voile (12) est suffisamment grande par rapport au diamètre de la roue pour former une barrière thermique entre la partie périphérique (11) et le moyeu (5).

3. Roue selon la revendication 1 ou 2 **caractérisée** en ce que l'épaisseur du voile intermédiaire (12) est inférieure à la moitié de l'épaisseur mesurée entre les surfaces d'appui (4) des garnitures (3).

4. Roue selon l'une quelconque des revendications 1 à 3 **caractérisée** en ce que le voile intermédiaire (12) a, vu en coupe par un plan contenant l'axe de rotation (6) de la roue (1), un profil dit transversal sensiblement symétrique par rapport à un axe (13) sécant au dit axe de rotation (6) de la roue.

5. Roue selon la revendication 4 **caractérisée** en ce que l'axe sécant (13) est perpendiculaire à l'axe (6) de rotation de la roue et la zone intermédiaire forme un voile droit symétrique.

6. Roue selon la revendication 4 **caractérisée** en ce que l'axe sécant (13) de relative symétrie est incliné par rapport à la perpendiculaire à l'axe (6) de rotation de la roue et la zone intermédiaire (10) forme un voile légèrement conique.

7. Roue selon la revendication 1 **caractérisée** en ce que les moyens (14) de raccordement consistent en un accroissement progressif de la matière depuis le voile intermédiaire (12) jusqu'à la partie périphérique et cet accroissement de matière débute par une large courbe de raccordement (15) de forme et valeur prédéterminées.

8. Roue selon l'une quelconque des revendications 1 à 7 **caractérisée** en ce qu'entre chacune des faces externes (4) de la partie périphérique (11) et celle correspondante des moyens (15) de raccordement du voile intermédiaire (12) à cette partie périphérique (11), la roue présente une portée cylindrique interne (16) permettant notamment de centrer la roue sur une machine de reprofilage des tables de roulement.

9. Roue selon l'une quelconque des revendications 1 à 8 **caractérisée** en ce qu'entre la table de roulement et la partie pourvue des surfaces (4) d'appui des garnitures de frein (3), la roue présente sur chaque flanc une gorge annulaire (17, 18) ayant une section en Vé dont celle (19) de ses deux parois (19, 20) qui est la plus proche du moyeu forme une portée cylindrique mâle concentrique à l'axe de rotation de la roue.

## Claims

1. A one-piece wheel for railway stock, comprising a hub (5) and bearing ― at a predetermined distance from its axis (6) ― a running surface (7) whose flanks (8, 9) directly define bearing surfaces (4) for brake linings (3),
which wheel has means for reducing temperature propagation at the time of braking, this wheel being characterised in that:
- between the hub (5) and the bearing surfaces (4) for the brake linings, it has an intermediate zone (10) which is substantially less thick than the wheel measured between the braking surfaces (4) borne by the flanks of the peripheral part (11), this intermediate zone defining a linking wheel-body (12) between the said peripheral part (11) and the hub (5) of the wheel and,
- the intermediate wheel-body (12) decreases in thickness from the hub (5) to its junction with the peripheral part (11) bearing the bearing surfaces (4) for the brake linings (3) and is joined to this peripheral part (11) by joining means (14) limiting the stress concentrations.

2. A wheel in accordance with Claim 1, characterised in that the height (H) of this body (12) is sufficiently great in relation to the diameter of the wheel to form a thermal barrier between the peripheral part (11) and the hub (5).

3. A wheel in accordance with Claim 1 or 2, characterised in that the thickness of the intermediate body (12) is less than half the thickness measured between the bearing surfaces (4) for the linings (3).

4. A wheel in accordance with any one of Claims 1 to 3, characterised in that when viewed sectioned through a plane containing the axis of rotation (6) of the wheel (1), the intermediate body (12) has a cross-section which is substantially symmetrical in relation to an axis (13) intersecting the said axis of rotation (6) of the wheel.

5. A wheel in accordance with Claim 4, characterised in that the intersecting axis (13) is perpendicular to the axis of rotation (6) of the wheel and the intermediate zone forms a symmetrical, right body.

6. A wheel in accordance with Claim 4, characterised in that the intersecting axis (13) of relative symmetry is at an incline to the perpendicular in relation to the axis of rotation (6) of the wheel and the intermediate zone (10) forms a slightly tapering body.

7. A wheel in accordance with Claim 1, characterised in that the joining means (14) consist of a gradual increase in the material from the intermediate body (12) to the peripheral part and this increase in material begins with a wide junction curve (15) of predetermined form and value.

8. A wheel in accordance with any one of Claims 1 to 7, characterised in that between each of the outer faces (4) of the peripheral part (11) and the associated face of the means (15) for joining the intermediate body (12) to this peripheral part (11), the wheel has an inner, cylindrical supporting surface (16) notably enabling the wheel to be centred on a reprofiling machine for the running surfaces.

9. A wheel in accordance with any one of Claims 1 to 8, characterised in that between the running surface and the part provided with the bearing surfaces (4) for the brake linings (3), each flank of the wheel has an annular groove (17, 18) with a V-section of which that wall (19) of its two walls (19, 20) which is the nearest to the hub forms a male, cylindrical supporting surface coaxial with the axis of rotation of the wheel.

## Patentansprüche

1. Monoblockrad für Eisenbahnwagen, welches eine Nabe (5) aufweist und in vorgegebenem Abstand von seiner Achse (6) eine Schienenlauffläche (7) trägt, deren Flanken (8, 9) direkt Auflageflächen (4) für Bremsbeläge (3) bilden,
wobei das Rad Mittel aufweist, um die Temperaturweiterleitung zum Zeitpunkt der Abbremsung zu verringern,
**dadurch gekennzeichnet**, daß:
- es zwischen der Nabe (5) und den Auflageflächen (4) Bremsbeläge aufweist, sowie einen Zwischenbereich (10), dessen Dicke, bezogen auf die Dicke des Rades, gemessen zwischen den von den Flanken des Umfangsabschnitts (11) getragenen Bremsflächen (4), erheblich vermindert ist, wobei dieser Zwischenbereich einen Verbindungssteg (12) zwischen dem Umfangsabschnitt (11) und der Nabe (5) des Rades bildet, und
- die Dicke des Zwischenstegs (12) von der Nabe (5) bis zum Anschluß an den die Auflageflächen der Bremsbeläge (3) tragenden Umfangsabschnitt (11) abnimmt und der Zwischensteg mit diesem Umfangsabschnitt mittels Verbindungseinrichtungen (14) verbunden ist, welche die Konzentration von Belastungen begrenzen.

2. Rad nach Anspruch 1, dadurch **gekennzeichnet**, daß, bezogen auf den Durchmesser des Rades, die Höhe (H) dieses Steges (12) groß genug ist, um eine Wärmesperre zwischen dem Umfangsabschnitt (11) und der Nabe (5) zu bilden.

3. Rad nach Anspruch 1 oder 2, dadurch **gekennzeichnet**, daß die Dikke des Zwischenstegs (12) kleiner ist als die Hälfte der zwischen den Auflageflächen (4) der Bremsbeläge (3) gemessenen Dicke.

4. Rad nach einem der Ansprüche 1 bis 3, dadurch **gekennzeichnet**, daß bei Betrachtung im Schnitt durch eine die Drehachse (6) des Rades (1) enthaltende Ebene der Zwischensteg (12) ein sogenanntes Querprofil aufweist, das zu einer sich mit der Drehachse (6) des Rades schneidenden Achse (13) im wesentlichen symmetrisch ist.

5. Rad nach Anspruch 4, dadurch **gekennzeichnet**, daß die sich schneidende Achse (13) senkrecht zur Drehachse des Rades steht und der Zwischenbereich einen geradlinigen symmetrischen Steg bildet.

6. Rad nach Anspruch 4, dadurch **gekennzeichnet**, daß die relativ symmetrische sich schneidende Achse (13) gegenüber der Senkrechten auf die Drehachse (6) des Rades geneigt ist und der Zwischenbereich (10) einen leicht konischen Steg bildet.

7. Rad nach Anspruch 1, dadurch **gekennzeichnet**, daß die Verbindungseinrichtungen (14) aus einer fortschreitenden Verdickung des Materials vom Zwischensteg (12) bis zum Umfangsabschnitt bestehen und diese Verdickung mit einem großen Anschlußbogen (15) von vorgegebener Form und Größe beginnt.

8. Rad nach einem der Ansprüche 1 bis 7, dadurch **gekennzeichnet**, daß das Rad zwischen jeder der außen liegenden Flächen (4) des Umfangsabschnitts (11) und der entsprechenden Fläche der Verbindungseinrichtungen (15) für den Anschluß des Zwischenstegs (12) an diesen Umfangsabschnitt (11) einen innenliegenden zylindrischen Bereich (16) aufweist, der vornehmlich die Zentrierung des Rades auf einer Maschine zum Nachschleifen des Profils der Schienenlaufflächen gestattet.

9. Rad nach einem der Ansprüche 1 bis 8, dadurch **gekennzeichnet**, daß das Rad zwischen der Schienenlauffläche und dem mit Auflageflächen (4) für die Bremsbeläge (3) versehenen Abschnitt auf jeder Flanke eine ring-förmige Auskehlung (17, 18) mit V-förmigem Querschnitt aufweist, bei welcher diejenige (19) ihrer beiden Wandungen (19, 20), die der Nabe am nächsten liegt, einen zur Drehachse des Rades konzentrischen zylindrischen Patrizenbereich bildet.
